# EUROPÄISCHE PATENTSCHRIFT

(11) **EP 2 628 635 B1**
(45) Veröffentlichungstag und Bekanntmachung des Hinweises auf die Patenterteilung: **30.03.2016**
(21) Anmeldenummer: 13151198.2
(22) Anmeldetag: 14.01.2013
(51) Int. Cl.: B60P 3/075

(54) **Anordnung zum Festhalten eines Zweiradfahrzeugs auf einem Transportfahrzeug**
Arrangement for holding a two-wheeled vehicle on a transport vehicle
Agencement de retenue d'un véhicule à deux roues sur un véhicule de transport

(30) Priorität: 15.02.2012 DE 102012101192
(43) Veröffentlichungstag der Anmeldung: 21.08.2013
(73) Patentinhaber: Müller, Matthias, 55296 Lörzweiler (DE)
(72) Erfinder: Müller, Matthias, 55296 Lörzweiler (DE)
(74) Vertreter: Klein, Thomas

(56) Entgegenhaltungen:
- WO-A1-98/19884
- US-A1- 2006 171 790
- US-A1- 2006 186 162
- US-A1- 2008 174 088
- US-A1- 2009 250 564
- US-B1- 7 287 942

## Beschreibung

Die Erfindung bezieht sich auf eine Anordnung zum Festhalten eines Zweiradfahrzeugs auf einem Transportfahrzeug, wobei mindestens ein Rad des Zweiradfahrzeugs eine Hohlachse mit einer koaxialen Durchgangsöffnung und das Rad einen kompressierbaren Reifen aufweist, mit einer Transportebene des Transportfahrzeugs, auf die das Zweiradfahrzeug mit seinen Rädern stellbar ist, mit einem oder mehreren spannbaren Zugorganen, die an dem Zweiradfahrzeug sowie an dem Transportfahrzeug angreifen und durch die das Zweiradfahrzeug gegen die Transport-ebene des Transportfahrzeugs spannbar ist.

Bei einer derartigen Anordnung (US 2006/0186162 A1) ist es bekannt, daß die Zugorgane an einem Teil des des Zweiradfahrzeugs angreifen und das Zweiradfahrzeug auf die Transportebene des Transportfahrzeugs spannen. Durch das Spannen eines Teils des Zweiradfahrzeugs auf die Transportebene werden auch die Federungen des Zweiradfahrzeugs um zumindest einen großen Teil ihres Federwegs komprimiert, damit das Zweiradfahrzeug bei Schwingungen während des Transportbetriebs nicht von der Transportebene abheben kann. Ein häufigeres Komprimierthalten der Federungen des Zweiradfahrzeugs führt zu einer Funktionsreduktion und letztendllch zu einem Ausfall der Federungen.

Aus der US 2009/0250564 A1 ist eine Anordnung zum Festhalten eines Zweiradfahrzeugs auf einer Transportebene eines Transportfahrzeugs bekannt, bei der eine Haltevorrichtung auf der Transportebene fest angeordnet ist, die zwei senkrechte, entsprechend einem Lochraster teleskopisch verlängerbare Ständer besitzt. Das eine Hohlachse aufweisende Rad des Zweiradfahrzeugs wird zwischen den beiden Ständern angeordnet und eine Stange durch die Hohlachse geschoben, deren beidseitig aus der Hohlachse herausschauende Enden mittels Riegeleinrichfungen mit den oberen Enden der Ständer verbindbar sind. Dazu sind vorher die Ständer auf eine solche Höhe einzustellen, daß deren Riegeleinrichtungen auf gleicher Höhe mit der Stange sind.

Eine nach dem gleichen Prinzip aufgebaute Anordnung ist aus der US 2006/0171790 A1 und der US 2008/0174088 A1 bekannt.

Aus der WO98/19884 A1 ist eine Anordnung zum Festhalten eines Fahrzeugs auf einer Transportebene bekannt, bei der Spanngurte mit ihren einen Enden an den Naben der Räder des Fahrzeugs anordenbar und mit Haken an ihren anderen Enden in Ankerösen einhakbar sind, die an der Transportebene befestigt sind. Nach dem Einhaken der Haken in die Ankerösen wird die Länge der Spanngurte so eingestellt, daß sie straff sind.

Aus der US 7 287 942 B1 Ist eine Anordnung zum Festhalten eines Zweiradfahrzeugs auf einer Transportebene eines Transportfahrzeugs bekannt, bei der die Anordnung zwei Haltearme aufweist, die mit ihren einen Enden an einer Stange angreifen, die durch die Hohlachse des Hinterrades des Zweiradfahrzeugs hindurchragt. Die Haltearme ragen hinter das Hinterrad zu einer an der Transportebene befestigten Halteplatte.

Aufgabe der Erfindung ist es daher eine einfach aufgebaute Anordnung der eingangs genannten Art zu schaffen, die eine Beschädigung von Teilen des Zweiradfahrzeugs vermeidend einen sicheren Transport des Zwelradfahrzeugs ermöglicht.

Diese Aufgabe wird erfindungsgemäß dadurch gelöst, daß ein Befestigungselement die Hohlachse des Rades durchragend anordenbar ist, an deren beidseitig aus der Durchgangsöffnung herausragenden Enden jeweils ein Zugorgan mit seinem einen Ende befestigbar ist, das mit seinem anderen Ende an dem Transportfahrzeug befestigbar ist, wobei das Rad unter einer bestimmten Kompression seines Reifens gegen die Transportebene verspannt ist.

Durch diese Ausbildung wird nicht der Rahmen sondern nur ein Rad gegen die Transportebene des Transportfahrzeugs verspannt, so daß kleine Komprimierung der Federungen des Zweiradfahrzeugs erfolgt. Damit können diese Federungen auch nicht aufgrund permanenter Kompression während des Transportbetriebes defekt gehen. Die Verspannung des Rades gegen die Transportebene erfolgt durch eine bestimmte Kompression seines Reifens.

Zweiradfahrzeuge können z.B. Fahrräder oder auch Motorräder sein.

Das Befestigungselement kann permanent fest in der Hohlachse angeordnet sein.

Um im normalen Fahrbetrieb des Zweiradfahrzeugs die ungefederten Massen reduziert zu halten, kann das Befestigungselement durch eine lösbare Verbindung fest mit der Hohlachse verbindbar sein und nur zu einem Transportbetrieb mit der Hohlachse verbunden werden.

Zur einfachen Montierbarkeit kann dabei das Befestigungselement mehrteilig ausgebildet sein und zwei Abstützteile aufweisen, wobei die Abstützteile eine größere radiale Erstreckung als die Durchgangsbohrung der Hohlachse besitzen und je an einem axialen Ende der Hohlachse abstützbar sowie beide Abstützteile mittels einer Spannvorrichtung miteinander verbindbar und axial gegen die Enden der Hohlachse spannbar sind.

Zur montageerleichternden Führung der Abstützteile axial zur Hohlachse können die Abstützteile der Hohlachse zugewandte axiale Führungsenden geringerer radialer Erstreckung als die Durchgangsbohrung der Hohlachse aufweisen, wobei die Führungsenden in die Durchgangsbohrung hineinragen.

Sind dabei die Führungsenden in die Hohlachse hinein sich konisch oder konischartig verjüngend ausgebildet, wobei der größte Durchmesser des Konus größer und der kleinste Durchmesser des Konus kleiner als der Durchmesser der Durchgangsbohrung der Hohlachse ist, so werden die Abstützteile zwangsläufig koaxial zur Hohlachse geführt. Gleichzeitig erfolgt ebenfalls zwangsläufig eine Anpassung an unterschiedliche Durchmesser der Durchgangsbohrungen von unterschiedlichen Hohlachsen. Damit kann dasselbe Befestigungselement bei unterschiedlichen Zweiradfahrzeugen mit unterschiedlichen Hohlachsen zur Anwendung kommen.

Konischartig verjüngend kann eine stufige Verjüngung der Führungsenden sein.

In einfacher und kostengünstiger Ausbildung kann die Spannvorrichtung eine Spannschraube sein, durch die die beiden Abstützteile miteinander verbindbar und axial gegen die Enden der Hohlachse spannbar sind.

Dabei kann die Spannschraube eine Koaxialbohrung des einen Abstützteils durchragen und mit ihrem Schraubenkopf an der der Hohlachse abgewandten Stirnseite dieses einen Abstützteils axial abgestützt sein sowie mit ihren dem Schraubenkopf abgewandten, mit einem Gewinde versehenen anderen Endbereich in eine Koaxialgewindebohrung des anderen Abstützteils oder einer Axialspannhülse einschraubbar sein, wobei die Axialspannhülse eine Koaxialbohrung des anderen Abstützteils durchragt und an ihrem der Hohlachse abgewandten Ende einen Hülsenkopf aufweist sowie an der der Hohlachse abgewandten Stirnseite des anderen Abstützteils abgestützt ist.

Die einen Enden der Zugorgane können fest mit den ihnen jeweils zugeordneten Abstützstücken verbunden sein.

Es ist aber auch möglich, daß die einen Enden der Zugorgane lösbar mit den ihnen jeweils zugeordneten Abstützstücken verbindbar sind.

Dazu können in einfacher Ausbildung die Abstützteile Befestigungsausnehmungen oder Befestigungshaken aufweisen, in die Haken oder Ösen der Zugorgane einhakbar sind.

Die Befestigungsausnehmungen können dabei an der Mantelfläche der Abstützteile radial umlaufende Haltenuten sein.

Zur Befestigung der Zugorgane an dem Transportfahrzeug können die anderen Enden der Zugorgane fest mit dem Transportfahrzeug verbunden sein.

Es ist aber auch möglich, daß die anderen Enden der Zugorgane lösbar mit dem Transportfahrzeug verbindbar sind.

Dazu können in einfacher Weise die Zugorgane Befestigungsausnehmungen oder Befestigungshaken aufweisen, in die Haken oder Ösen des Transportfahrzeugs einhakbar sind.

Als Zugorgane sind alle eine Zugspannung erzeugenden Zugelemente anwendbar. Kostengünstig weil handelsüblich können die Zugorgane Spanngurte sein.

Zur Erzeugung der Zugspannung bei der Befestigung des Zweiradfahrzeugs auf dem Transportfahrzeug können die Zugorgane durch Spannvorrichtungen unter Zugspannung setzbar sein.

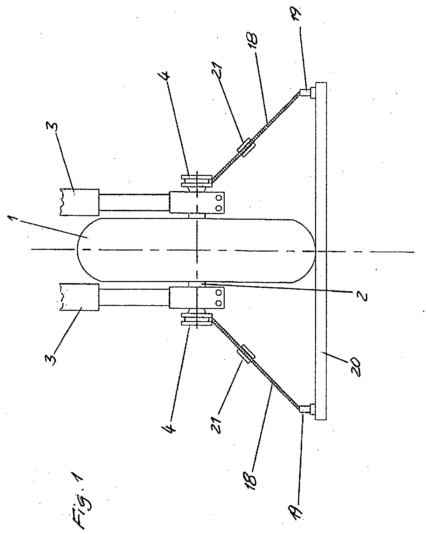

Ein Ausführungsbeispiel der Erfindung ist in der Zeichnung dargestellt und wird im folgenden näher beschrieben. Es zeigen
- Figur 1: eine Frontansicht einer Anordnung zum Festhalten eines Zweiradfahrzeugs auf einer Transportebene eines Transportfahrzeugs

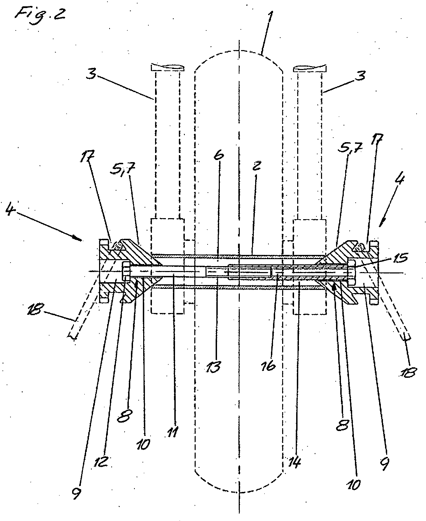

- Figur 2: einen vergrößerten Ausschnitt der Anordnung nach Figur 1.

Die dargestellte Anordnung zum Festhalten eines Zweiradfahrzeugs auf einer Transportebene 20 eines Transportfahrzeugs zeigt ein Rad 1 eines Motorrads.

Das Rad 1 besitzt eine Hohlachse 2, an der über eine Teleskopgabel 3 der nicht dargestellte Rahmen des Motorrads abgestützt ist.

An jedem der beiden axialen Enden der Hohlachse 2 ist ein Abstützteil 4 angeordnet, das ein koaxiales konisch sich verjüngendes Führungsende 5 aufweist, das teilweise in die Durchgangsbohrung 6 der Hohlachse 2 hineinragt.

Dabei ist der große Durchmesser des Konus 7 größer als der Durchmesser der Durchgangsbohrung 6 und der kleinste Durchmesser des Konus 7 kleiner als der Durchmesser der Durchgangsbohrung 6 der Hohlachse 2.

Dadurch stützen sich die Abstützteile 4 mit ihren Konusen 7 axial an den Mündungsenden der Polachse 2 ab.

Beide Abstützteile 4 weisen eine durchgehende stufige Koaxialbohrung 8 auf, deren große Stufe 9 der Hohlachse 2 abgewandt und deren kleine Stufe 10 der Hohlachse 2 zugewandt ist.

In die Koaxialbohrung 8 des linken Abstützteils 4 ist eine Spannschraube 11 eingeführt, die mit ihrem Schraubenkopf 12 an der Schulter des Übergangs von der großen zur kleinen Stufe 9, 10 axial abgestützt ist.

Der in die Durchgangsbohrung 6 hineinragende Schaft der Spannschraube 11 ist an seinem dem Schraubenkopf 12 abgewandten Endbereich mit einem Gewinde 13 versehen.

In die Koaxialbohrung 8 des rechten Abstützteils 4 ist eine Axialspannhülse 14 eingeführt, die mit ihrem Schraubenkopf 15 an der Schulter des Übergangs von der großen zur kleinen Stufe 9, 10 axial abgestützt ist.

Der in die Durchgangsbohrung 6 hineinragende Schaft der Axialspannhülse 14 weist eine Koaxialgewindebohrung 16 auf, in die die Spannschraube 11 mit ihrem Gewinde 13 eingeschraubt ist und die beiden Abstützteile 4 fest gegen die Stirnseiten der Hohlachse 2 verspannt.

Damit bilden die Abstützteile 4 und die Spannschraube 11 sowie die Axialspannhülse 14 ein fest an der Hohlachse 2 angeordnetes Befestigungselement.

An ihren der Hohlachse 2 abgewandten Endbereichen sind die Abstützteile 4 annähernd zylindrisch ausgebildet und an der Mantelfläche des zylindrischen Bereichs mit einer radial umlaufenden Haltenut 17 versehen.

An den Haltenuten 17 greifen die einen Enden von Spanngurten 18 an, deren andere Enden mit Halteelementen 19 an den seitlichen Randbereichen der Transportebene 20 des ansonsten nicht dargestellten Transportfahrzeugs angreifen.

Nach dem in Fahrtrichtung ausgerichteten mittigen Aufstellen des Motorrads auf die Transportebene 20 werden die Spanngurte 18 mit ihren einen Enden mit den Abstützteilen 4 und mit ihren anderen Enden mit der Transportebene 20 verbunden und durch Spannvorrichtungen 21 die Spanngurte 18 gespannt.

Dabei wird das Rad 1 unter einer bestimmten Kompression seines Reifens fest gegen die Transportebene 20 verspannt, während der Rahmen und die Federung des Motorrads unverspannt bleiben.

### Bezugszeichenliste

- 1: Rad
- 2: Hohlachse
- 3: Teleskopgabel
- 4: Abstützteil
- 5: Führungsende
- 6: Durchgangsbohrung
- 7: Konus
- 8: Koaxialbohrung
- 9: große Stufe
- 10: kleine Stufe
- 11: Spannschraube
- 12: Schraubenkopf
- 13: Gewinde
- 14: Axialspannhülse
- 15: Schraubenkopf
- 16: Koaxialgewindebohrung
- 17: Haltenut
- 18: Spanngurt
- 19: Halteelement
- 20: Transportebene
- 21: Spannvorrichtung

## Patentansprüche

1. Anordnung zum Festhalten eines Zweiradfahrzeugs mit Rahmen und Federung auf einem Transportfahrzeug, wobei mindestens ein Rad (1) des Zweiradfahrzeugs eine Hohlachse (2) mit einer koaxialen Durchgangsöffnung (6) und das Rad (1) einen kompressierbaren Reifen aufweist, mit einer Transportebene (20) des Transportfahrzeugs, auf die das Zweiradfahrzeug mit seinen Rädern stellbar ist, mit einem oder mehreren Zugorganen, die an dem Zweiradfahrzeug sowie an dem Transportfahrzeug angreifen und durch die das Zweiradfahrzeug gegen die Transportebene (20) des Transportfahrzeugs spannbar ist, wobei ein Befestigungselement die Hohlachse (2) des Rades (1) durchragend angeordnet ist, **dadurch gekennzeichnet, daß** an den beidseitig aus der Durchgangsöffnung (6) herausragenden Enden des Befestigunsgelementes jeweils ein spannbares Zugorgan mit seinem einen Ende befestigt ist, das mit seinem anderen Ende an dem Transportfahrzeug befestigbar ist, wobei das Rad (1) unter einer bestimmten Kompression seines Reifens gegen die Transportebene (20) verspannt ist, während der Rahmen und die Federung unverspannt bleiben.

2. Vorrichtung nach Anspruch 1, **dadurch gekennzeichnet, daß** das Befestigungselement durch eine lösbare Verbindung fest mit der Hohlachse (2) verbindbar ist.

3. Vorrichtung nach Anspruch 2, **dadurch gekennzeichnet, daß** das Befestigungselement mehrteilig ausgebildet ist und zwei Abstützteile (4) aufweist, wobei die Abstützteile (4) eine größere radiale Erstreckung als die Durchgangsbohrung (6) der Hohlachse (2) besitzen und je an einem axialen Ende der Hohlachse (2) abstützbar sowie beide Abstützteile (4) mittels einer Spannvorrichtung miteinander verbindbar und axial gegen die Enden der Hohlachse (2) spannbar sind.

4. Vorrichtung nach Anspruch 3, **dadurch gekennzeichnet, daß** die Abstützteile (4) der Hohlachse (2) zugewandte axiale Führungsenden (5) geringerer radialer Erstreckung als die Durchgangsbohrung (6) der Hohlachse (2) aufweisen, wobei die Führungsenden (5) in die Durchgangsbohrung (6) hineinragen.

5. Vorrichtung nach einem der Ansprüche 3 bis 4, **dadurch gekennzeichnet, daß** die Spannvorrichtung eine Spannschraube (11) ist.

6. Vorrichtung nach Anspruch 5, **dadurch gekennzeichnet, daß** die Spannschraube (11) eine Koaxialbohrung (8) des einen Abstützteils (4) durchragt und mit ihrem Schraubenkopf (12) an der der Hohlachse (2) abgewandten Stirnseite dieses einen Abstützteils (4) axial abgestützt ist sowie mit ihren dem Schraubenkopf (12) abgewandten, mit einem Gewinde (13) versehenen anderen Endbereich in eine Koaxialgewindebohrung (16) des anderen Abstützteils (4) oder einer Axialspannhülse (14) einschraubbar ist, wobei die Axialspannhülse (14) eine Koaxialbohrung (8) des anderen Abstützteils (4) durchragt und an ihrem der Hohlachse (2) abgewandten Ende einen Hülsenkopf (15) aufweist sowie an der der Hohlachse (2) abgewandten Stirnseite des anderen Abstützteils (4) abgestützt ist.

7. Vorrichtung nach einem der Ansprüche 1 bis 6, **dadurch gekennzeichnet, daß** die einen Enden der Zugorgane lösbar mit den ihnen jeweils zugeordneten Abstützstücken (4) verbindbar sind.

8. Vorrichtung nach einem der Ansprüche 1 bis 7, **dadurch gekennzeichnet, daß** die anderen Enden der Zugorgane lösbar mit dem Transportfahrzeug verbindbar sind.

9. Vorrichtung nach einem der vorhergehenden Ansprüche, **dadurch gekennzeichnet, daß** die Zugorgane Spanngurte (18) sind.

10. Anordnung nach einem der vorhergehenden Ansprüche, **dadurch gekennzeichnet, daß** die Zugorgane durch Spannvorrichtungen (21) unter Zugspannung setzbar sind.

## Claims

1. Arrangement for securing a two-wheeled vehicle having a frame and a suspension system on a transport vehicle, wherein at least one wheel (1) of the two-wheeled vehicle has a hollow axle (2) with a coaxial through opening (6), and the wheel (1) has a compressible tyre, with a transport plane (20) of the transport vehicle, onto which transport plane the two-wheeled vehicle can be placed by the wheels thereof, with one or more tension members which act on the two-wheeled vehicle and on the transport vehicle and by means of which the two-wheeled vehicle can be clamped against the transport plane (20) of the transport vehicle, wherein a fastening element is arranged projecting through the hollow axle (2) of the wheel (1), **characterized in that** a respective clampable tension member is fastened by the one end thereof to the ends of the fastening element, which ends project out of the through opening (6) on both sides, said tension member being fastenable by the other end thereof to the transport vehicle, wherein the wheel (1) is braced with a certain compression of the tyre thereof against the transport plane (20), while the frame and the suspension system remain unbraced.

2. Device according to Claim 1, **characterized in that** the fastening element is fixedly connectable to the hollow axle (2) by means of a releasable connection.

3. Device according to Claim 2, **characterized in that** the fastening element is of multi-part design and has two supporting parts (4), wherein the supporting parts (4) have a greater radial extent than the through bore (6) of the hollow axle (2) and are supportable at one axial end of the hollow axle (2) each, and also the two supporting parts (4) are connectable to each other by means of a clamping device and are clampable axially against the ends of the hollow axle (2).

4. Device according to Claim 3, **characterized in that** the supporting parts (4) have guide ends (5) which face the hollow axle (2) and have a smaller radial extent than the through bore (6) of the hollow axle (2), wherein the guide ends (5) project into the through bore (6).

5. Device according to either of Claims 3 and 4, **characterized in that** the clamping device is a clamping screw (11).

6. Device according to Claim 5, **characterized in that** the clamping screw (11) projects through a coaxial bore (8) of the one supporting part (4) and is supported axially by the screw head (12) thereof on that end side of said one supporting part (4) which faces away from the hollow axle (2), and can be screwed by the other end region thereof, which end region faces away from the screw head (12) and is provided with a thread (13), into a coaxial threaded bore (16) of the other supporting part (4) or of an axial clamping sleeve (14), wherein the axial clamping sleeve (14) projects through a coaxial bore (8) of the other supporting part (4) and has a sleeve head (15) at the end thereof facing away from the hollow axle (2) and is supported on that end side of the other supporting part (4) which faces away from the hollow axle (2).

7. Device according to one of Claims 1 to 6, **characterized in that** the one ends of the tension members are connectable releasably to the supporting pieces (4) respectively assigned thereto.

8. Device according to one of Claims 1 to 7, **characterized in that** the other ends of the tension members are connectable releasably to the transport vehicle.

9. Device according to one of the preceding claims, **characterized in that** the tension members are clamping straps (18).

10. Arrangement according to one of the preceding claims, **characterized in that** the tension members can be placed under tensile stress by means of clamping devices (21).

## Revendications

1. Arrangement pour retenir un véhicule à deux roues avec cadre et suspension sur un véhicule de transport, au moins une roue (1) du véhicule à deux roues possédant un axe creux (2) pourvu d'une ouverture de passage coaxiale (6) et la roue (1) possédant un pneu compressible, comprenant un plan de transport (20) du véhicule de transport sur lequel le véhicule à deux roues peut être posé avec ses roues, comprenant un ou plusieurs organes de traction qui sont appliqués sur le véhicule à deux roues ainsi que sur le véhicule de transport et par le biais desquels le véhicule à deux roues peut être haubané par rapport au plan de transport (20) du véhicule de transport, un élément de fixation étant disposé de manière à traverser l'axe creux (2) de la roue (1), **caractérisé en ce qu'**un organe de traction pouvant être tendu est respectivement fixé par son extrémité aux extrémités de l'élément de fixation qui font saillie des deux côtés hors de l'ouverture de passage (6), lequel peut être fixé par son autre extrémité au véhicule de transport, la roue (1) étant haubanée contre le plan de transport (20) sous une compression donnée de son pneu, alors que le cadre et la suspension ne sont pas haubanés.

2. Dispositif selon la revendication 1, **caractérisé en ce que** l'élément de fixation peut être relié en position fixe avec l'axe creux (2) par le biais d'une liaison amovible.

3. Dispositif selon la revendication 2, **caractérisé en ce que** l'élément de fixation est configuré en plusieurs parties et possède deux parties d'appui (4), les parties d'appui (4) possédant une projection radiale plus grande que l'ouverture de passage (6) de l'axe creux (2) et pouvant s'appuyer à chacune à une extrémité axiale de l'axe creux (2), et les parties d'appui (4) pouvant être reliées l'une à l'autre au moyen d'un dispositif de serrage et pouvant être serrées dans le sens axial contre les extrémités de l'axe creux (2).

4. Dispositif selon la revendication 3, **caractérisé en ce que** les parties d'appui (4) possèdent des extrémités de guidage (5) faisant face dans le sens axial à l'axe creux (2) dont la projection radiale est plus petite que l'ouverture de passage (6) de l'axe creux (2), les extrémités de guidage (5) pénétrant dans l'ouverture de passage (6).

5. Dispositif selon l'une des revendications 3 à 4, **caractérisé en ce que** le dispositif de serrage est une vis de serrage (11).

6. Dispositif selon la revendication 5, **caractérisé en ce que** la vis de serrage (11) traverse une ouverture coaxiale (8) d'une partie d'appui (4) et s'appuie dans le sens axial avec sa tête de vis (12) contre le côté frontal de cette partie d'appui (4) à l'opposé de l'axe creux (2) et, avec son autre zone d'extrémité, à l'opposé de la tête de vis (12) et pourvue d'un filet (13), peut être vissée dans un trou filet axial (16) de l'autre partie d'appui (4) ou d'une douille de serrage axiale (14), la douille de serrage axiale (14) traversant une ouverture coaxiale (8) de l'autre partie d'appui (4) et possédant, à son extrémité à l'opposé de l'axe creux (2), une tête de douille (15) et s'appuyant sur le côté frontal de l'autre partie d'appui (4) à l'opposé de l'axe creux (2).

7. Dispositif selon l'une des revendications 1 à 6, **caractérisé en ce que** l'une des extrémités des organes de traction peut être reliée de manière amovible avec les pièces d'appui (4) qui lui sont respectivement associées.

8. Dispositif selon l'une des revendications 1 à 7, **caractérisé en ce que** les autres extrémités des organes de traction peuvent être reliées de manière amovible avec le véhicule de transport.

9. Dispositif selon l'une des revendications précédentes, **caractérisé en ce que** les organes de traction sont des sangles de haubanage (18).

10. Arrangement selon l'une des revendications précédentes, **caractérisé en ce que** les organes de traction peuvent être mis en contrainte de traction par des dispositifs de serrage (21).
